# FASCICULE DE BREVET EUROPEEN

(11) **EP 0 596 783 B1**
(45) Date de publication et mention de la délivrance du brevet: **12.03.1997**
(21) Numéro de dépôt: 93402661.8
(22) Date de dépôt: 29.10.1993
(51) Int. Cl.: B60Q 1/26

(54) **Feu de signalisation à éléments lumineux modulaires, pour véhicule automobile**
Signalleuchte mit modularen Lichteinheiten für Fahrzeuge
Signal lights with modular lighting elements for vehicle

(30) Priorité: 02.11.1992 FR 9213089
(43) Date de publication de la demande: 11.05.1994
(73) Titulaire: VALEO VISION, 93000 Bobigny (FR)
(72) Inventeur: Brassier, Marc, F-94300 Vincennes (FR); Gasquet, Jean-Claude, F-89100 Saint-Clément (FR); Segaud, Daniel, F-75012 Paris (FR); Mauroy, Bernard, F-77680 Roissy en Brie (FR)
(74) Mandataire: Martin, Jean-Jacques

(56) Documents cités:
- EP-A- 0 326 668
- EP-A- 0 328 088
- EP-A- 0 434 471
- WO-A-84/00799
- DE-A- 2 941 634
- US-A- 5 038 255
- PATENT ABSTRACTS OF JAPAN vol. 10, no. 307 (M-527)(2363) 18 Octobre 1986 & JP-A-61 119 444 (STANLEY ELECTRIC CO LTD)

## Description

La présente invention a trait d'une façon générale aux feux de signalisation de véhicules automobiles.

Un feu de signalisation comprend classiquement une lampe à filament monté sur une platine, constituant son fond, et un voyant. Des aménagements optiques sont fréquemment utilisés pour rabattre une proportion importante du rayonnement issu de la lampe dans une direction voisine d'un axe d'émission privilégié, ou encore pour donner à la plage éclairante du feu, en dépit de l'utilisation d'une source intense pratiquement ponctuelle, une intensité lumineuse homogène.

On connaît également un feu de signalisation qui est subdivisé en une pluralité d'éléments comportant chacun une lampe à filament de petites dimensions, par exemple une lampe de type sans culot ("Wedge base"), en coopération avec ses propres aménagements optiques, le but étant d'obtenir une plage éclairante à la fois homogène et de grande taille, et un feu d'épaisseur réduite. Un tel feu à plusieurs lampes est cependant coûteux à réaliser.

Plus généralement, les divers composants d'un feu, à l'exception de la ou des lampes qui sont standard, doivent faire l'objet d'une étude et d'un développement spécifiques, au cas par cas, en fonction d'un cahier des charges donné. Il en résulte un prix de revient élevé.

D'autres inconvénients des feux de signalisation classique résident en ce que les lampes à filament utilisées doivent être remplacées fréquemment, en ce qu'ils ont généralement une profondeur importante, du fait que le socle doit présenter au moins avec certaines lampes un profil parabolique de concentration de flux, et en ce qu'il est impossible de donner aux plages éclairantes des contours complexes. Sur ce dernier point, le concepteur est généralement tenu à des formes simples de type circulaire ou rectangulaire.

On connait par EP-A-0 328 088 un feu de signalisation comportant une pluralité d'éléments lumineux comportant des moyens pour être fixés de façon juxtaposée dans des positions déterminées sur un support constitué d'un circuit imprimé, et comportant des aménagements latéraux d'ancrage mutuel.

On connaît par ailleurs , par EP-A-0 326 668, un feu de signalisation ayant les particularités du préambule de la revendication 1.

De tels feux connus exigent cependant de nombreux composants séparés et en particulier une plaque de fond, au moins un circuit imprimé commun, une plaque intermédiaire, en plus des éléments lumineux individuels. En outre, les éléments lumineux sont soudés individuellement sur un circuit imprimé.

Il en résulte qu'un tel feu est extrêmement coûteux et fastidieux à monter, et que la plus grande partie de ses composants doit faire l'objet d'une conception sur mesure en fonction du cahier des charges du feu à obtenir.

La présente invention vise à pallier les inconvénients de la technique antérieure et à proposer un feu de signalisation pouvant être réalisé aisément et économiquement, avec une plage éclairante de caractéristiques géométriques et photométriques pouvant être définies très librement, avec en outre les avantages d'une épaisseur de feu extrêmement limitée et d'une bonne fiabilité, grâce à une conception modulaire propre.

Elle concerne à cet effet un feu de signalisation pour véhicule automobile tel que défini dans la revendication 1 ci-après.

Des aspects préférés de ce feu sont spécifiés dans les sous-revendications.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue en coupe longitudinale médiane d'un module à diodes électroluminescentes selon une première forme de réalisation de l'invention,
la figure 2 est une vue de dessus partielle d'un ensemble de modules selon la figure 1,
la figure 3 est une vue en coupe transversale selon la ligne III-III du module de la figure 1,
la figure 3a est une vue en coupe transversale partielle analogue à la figure 3, illustrant une variante de réalisation,
la figure 4 est une vue en coupe transversale selon la ligne IV-IV du module de la figure 1,
la figure 5 est une vue de dessus schématique de quatre modules juxtaposés,
la figure 6 illustre sous forme schématique sept possibilités d'agencements de moyens d'assemblage entre modules voisins,
la figure 7 est une vue de dessous d'une deuxième forme de réalisation d'un module à diode électroluminescente selon l'invention,
la figure 8 est une vue en élévation de côté du module de la figure 7,
la figure 9 est une vue en coupe axiale médiane du module des figures 7 et 8,
la figure 10 est une vue en élévation de face du module des figures 7 à 9,
la figure 11 est une vue de dessus du module des figures 7 à 10,
la figure 12 est une vue en coupe transversale médiane d'un module à diodes électroluminescentes selon une troisième forme de réalisation de l'invention,
la figure 13 est une vue partielle en coupe longitudinale médiane du module de la figure 12,
la figure 14 est une vue partielle de dessus du module des figures 12 et 13,
la figure 15 illustre schématiquement des moyens de connexion électrique de modules à diodes électroluminescentes entre eux,
la figure 16a est une vue en coupe verticale axiale schématique d'un module à diodes électroluminescentes raccordées électriquement selon un premier mode de raccordement,
la figure 16b est une vue en coupe verticale axiale schématique d'un module à diodes électroluminescentes raccordées électriquement selon un deuxième mode de raccordement,
la figure 16c est une vue en coupe verticale axiale schématique d'un module à diodes électroluminescentes raccordées électriquement selon un troisième mode de raccordement,
la figure 17 est une vue de face schématique d'un ensemble de feux de signalisation arrière réalisé à l'aide de modules à diodes électroluminescentes selon la présente invention,
la figure 18 est une vue en coupe selon la ligne XVIII-XVIII de la figure 17,
la figure 19 est une vue en coupe selon la ligne XIX-XIX de la figure 17,
la figure 20 est une vue en coupe selon la ligne XX-XX de la figure 17,
la figure 21 est une vue en coupe selon la ligne XXI-XXI de la figure 17,
la figure 22 est une vue en coupe selon la ligne XXII-XXII de la figure 17,
la figure 23 est une vue d'ensemble schématique, en coupe transversale, d'un feu stop surélevé réalisé à l'aide de modules à diodes électroluminescentes selon la présente invention,
la figure 24 est une vue de détail en coupe transversale du feu de la figure 23, et
la figure 25 est une vue de face du feu des figures 23 et 24.

On notera préliminairement que, d'une figure à l'autre, des éléments ou parties identiques ou similaires sont désignés par les mêmes signes de référence, et ne seront pas décrits à nouveau afin d'alléger la description.

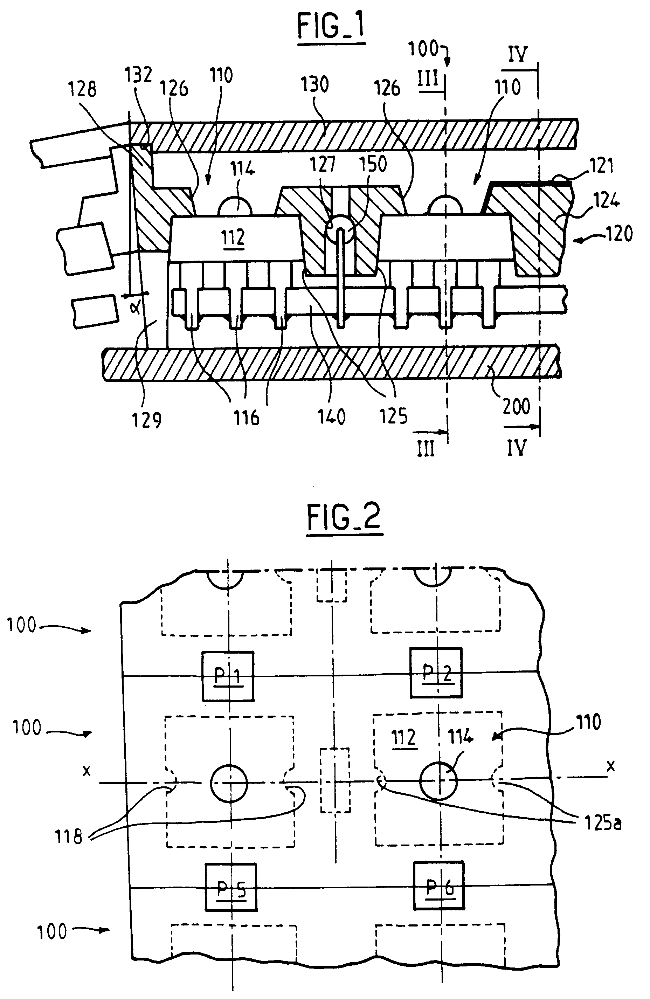

En référence tout d'abord aux figures 1 à 5, on a représenté un module à diodes électroluminescentes destiné à tenir lieu de composant élémentaire, apte à être juxtaposé à des modules identiques, pour la réalisation d'un feu de signalisation, ou d'un ensemble de feux de signalisation, de grande surface.

Dans le présent exemple, un tel module, globalement indiqué en 100, comprend quatre diodes électroluminescentes 110 de type "Brewster", disponibles dans le commerce.

Un avantage lié à l'utilisation de diodes Brewster par groupe de quatre réside en ce que chaque diode nécessite une tension électrique d'alimentation de l'ordre de 2,5 à 3 volts, si bien qu'en plaçant ces diodes en série, on peut y appliquer directement la tension de 12 volts disponible aux bornes de la batterie du véhicule.

Chaque diode électroluminescente ou DEL 110 comporte un corps 112 de contour généralement carré et de section transversale trapézoïdale, de façon classique en soi. Au centre de la surface extérieure ou surface avant du corps est présente une protubérance 114 de forme sensiblement hémisphérique. A l'arrière du corps 112 s'étendent trois pattes métalliques 116 de connexion électrique, dont la section dans une région terminale est réduite. Comme le montre la figure 2, le corps 112 de la DEL 110 comporte deux encoches latérales opposées 118 de section semi-circulaire, destinées à assurer le position de la DEL dans une position bien déterminée.

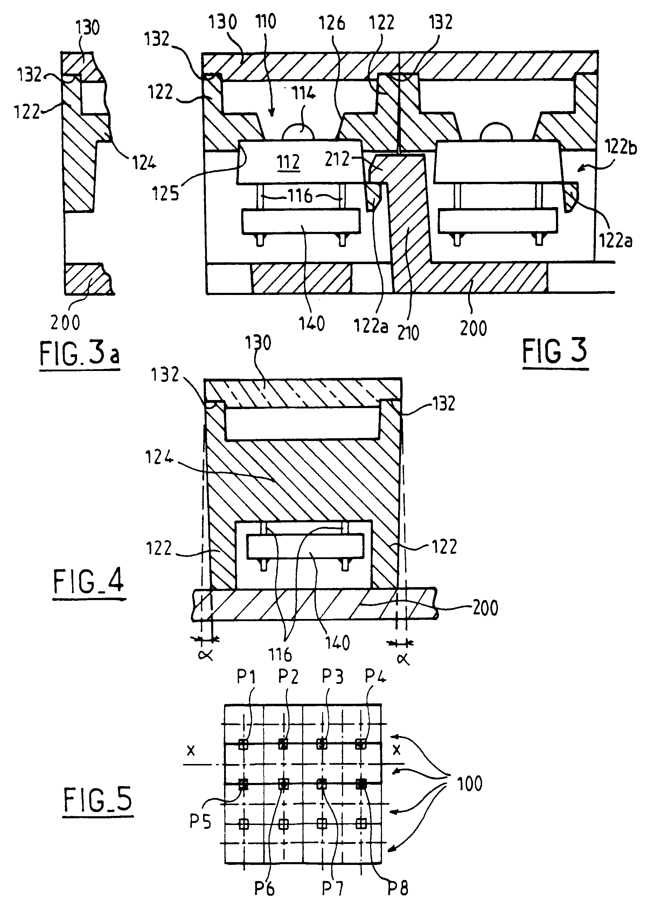

Un module selon cette première forme de réalisation comporte une ossature 120 allongée selon un axe longitudinal x-x (figure 2), dont la section droite présente généralement la forme d'un "H" (figure 4). Cette ossature présente deux montants latéraux 122 reliés entre eux, essentiellement à mi-hauteur, par une traverse 124. Cette ossature est réalisée préférentiellement par moulage de matière plastique.

Comme le montre la figure 1, dans la face inférieure de la traverse 124 sont pratiqués quatre logements 125 alignés selon l'axe x-x et dont la forme est essentiellement complémentaire de celle des corps 112 des quatre DEL 110. Ainsi chaque logement 125 présente deux nervures latérales 125a (figure 2) destinées à être engagées dans les encoches 118 du corps 112 de DEL. En outre, dans la face supérieure de ladite traverse sont formés, à l'aplomb des logements 125, quatre ouvertures traversantes 126 de section généralement circulaire, débouchant au centre desdits logements.

Les ouvertures 126 sont tronconiques, en étant évasées vers le haut comme illustré, de manière à laisser passer l'ensemble du flux lumineux légèrement divergent (l'angle solide est typiquement de 50°) issu de l'élément 110 associé.

Par ailleurs, l'ossature 120 comporte deux parois terminales opposées 128 (figure 1) s'étendant vers le haut.

A l'extrémité supérieure des branches latérales 122 de l'ossature est fixé un élément transparent formant couvercle 130, que l'on utilise avantageusement comme élément optique. Cet élément 130 est allongé suivant l'axe x-x, sur toute la longueur de l'ossature 120. Il comporte le long de ses quatre bords des rainures 132 ouvertes sur le côté et destinées à recevoir les extrémités libres des branches 122 et des parois terminales 128, pour assurer un bon positionnement mutuel de ces éléments.

Par exemple, l'élément 130 peut comporter, en relief sur sa surface interne ou externe, quatre lentilles de Fresnel alignées avec les ouvertures 126 de sortie de lumière formées dans l'ossature 120.

De préférence, les parties 110, 120 et 130 du module sont assemblées par collage, soudure aux ultrasons, ou toute autre technique appropriée, de manière à assurer une parfaite cohésion du module 100.

La partie inférieure des branches (en se référant aux figures 1, 3 et 4) et la traverse 124 définissent ensemble une cavité destinée à recevoir un circuit imprimé 140, de forme allongée, sur lequel les broches de connexion 116 des DELs sont soudées. On observe qu'à l'aplomb de chaque paroi terminale 128 de l'ossature est présente une ouverture 129 (figure 1) qui permet la connexion électrique, en parallèle, d'un circuit imprimé 140 avec un circuit imprimé voisin.

De façon classique, des diodes électroluminescentes placées en série nécessitent l'interposition, en série également, d'une résistance de limitation de courant. Une telle résistance est indiquée en 150. Elle est placée dans un logement complémentaire 127 formé dans la traverse 124 de l'ossature entre deux logements 125 adjacents, et ouvert au moins vers le bas. De la sorte, la résistance 150 peut être soudée directement sur le circuit imprimé 140 (figure 1).

Comme le montrent les figures 1 et 4, l'ossature 120 présente au niveau de ses bords longitudinaux et de ses bords terminaux un angle de dépouille a, par exemple de 5°. Cet angle de dépouille permet, comme on le verra en détail plus loin, de juxtaposer intimement plusieurs modules à DELs avec des décalages angulaires mutuels pouvant atteindre en l'espèce 10°, ce qui permet de réaliser des surfaces bombées.

Une pluralité de modules 100 selon l'invention sont destinés à être montés sur une platine de support 200, à l'aide de moyens dont on va décrire ci-dessous une forme de réalisation particulière.

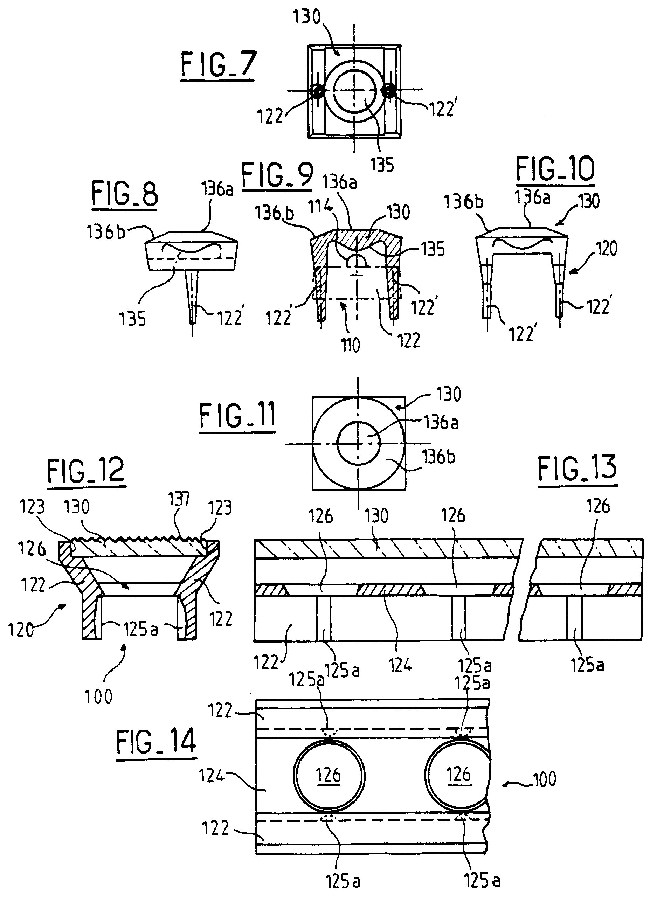

On définit tout d'abord sur un module 100 huit positions, notées P1 à P8 sur la figure 5, situées respectivement de part et d'autre, en direction transversale, d'un élément DEL 110.

On prévoit ensuite qu'à chaque position, l'ossature 120 peut présenter l'une parmi trois configurations différentes, à savoir :
- une configuration pleine ou obturée, c'est-à-dire que la paroi latérale 122 de l'ossature dans cette position est sensiblement ininterrompue; cette configuration est notée "O" et illustrée sur la figure 3a;
- une configuration trouée ou ouverte, c'est-à-dire que la paroi latérale 122 de l'ossature dans cette position est interrompue sur une largeur prédéterminée, pour laisser un passage s'étendant entre une hauteur voisine du plan supérieur du corps 112 de LED et la base de l'ossature; cette configuration est notée "T", et illustrée sur la figure 3, où les deux modules 100 juxtaposés présentent chacun, dans une position située à gauche, un tel passage; et
- une configuration de clipsage : la paroi latérale 122 de l'ossature est interrompue essentiellement comme pour la configuration "T" précitée, mais une dent 122a définit entre elle et l'extrémité supérieure du passage une cavité 122b; cette configuration est notée "C", et est illustrée sur la figure 3, où les deux modules 100 juxtaposés présentent chacun, dans une position située à droite, une telle configuration.

La platine 200 comporte, en des emplacements bien déterminés, des pattes souples 210 qui s'étendent vers le haut et qui se terminent chacune par une dent 212 faisant saillie vers le côté. Une telle patte est illustrée sur la figure 3. La largeur de chaque patte est choisie égale ou légèrement inférieure à la largeur du passage défini par la paroi latérale 122 de l'ossature 120 dans les configurations "T" et "C".

Ainsi une ossature 120 peut présenter dans ses huit positions un motif de huit configurations d'assemblage choisie parmi un nombre très important (égal en théorie à 3⁸) de motifs possibles.

Et un motif particulier de configurations d'assemblage peut constituer, selon un autre aspect de la présente invention, un codage associé au type de module à diodes électroluminescentes considéré. Ainsi il est possible de distinguer des des modules selon la couleur dans laquelle ils émettent (notamment rouge ou ambre), selon la nature des éléments optiques (billes, stries, lentilles, échelons de Fresnel, etc...) formés sur l'élément de recouvrement transparent 130, etc... Un tel "codage" a pour fonction essentielle d'assurer un détrompage lors de la mise en place d'une pluralité de modules 100 sur la platine 200, en évitant notamment que des modules de natures différentes ne puissent être mélangés, en évitant également que des modules identiques ne puissent être orientés tête-bêche, et en évitant qu'un emplacement de la platine destiné à recevoir un certain type de module ne puisse recevoir accidentellement un module de type différent.

Plus précisément, on comprend aisément à partir des figures 3 et 3a que, lors de la juxtaposition côte-à-côte de deux modules 100, une configuration "C" nécessite d'être en face d'une configuration "T" afin de laisser la place nécessaire à la patte de clipsage 210 de la platine 200. Ainsi l'on observe, au milieu de la figure 3, que cette patte 210, dont la dent 212 est engagée dans la cavité 122b du module situé à gauche, doit emprunter un chemin passant par le passage défini par la configuration "T" du module situé à droite. On peut ainsi réaliser un détrompage entre modules placés côte-à-côte, pour s'assurer qu'ils sont de même type.

On comprend également qu'un module ne peut être positionné sur la platine si une patte de clipsage 210 se trouve au droit d'une configuration "O". On réalise ainsi un détrompage entre module et platine, pour s'assurer que la platine reçoit bien le type de module qui convient.

La figure 6 illustre, par les codes "C", "T" et "O" sus-mentionnés, sept motifs de configurations particulièrement appropriées. Chaque motif comprend trois configurations clipsées "C" en triangle, permettant l'ancrage sur la platine en trois points, c'est-à-dire par trois pattes de clipsage 210, chaque côté longitudinal comportant au moins l'une de ces configurations "C". On confère ainsi au montage une grande stabilité. On peut ainsi identifier sept types différents de modules.

Bien entendu, d'autres motifs peuvent être envisagés, les contraintes étant qu'au moins une configuration clipsée "C" soit présente de chaque côté longitudinal, et qu'une configuration trouée "T" soit présente dans la position située de l'autre côté de l'élément DEL 110 considéré.

De nouveau en référence à la figure 1, il est avantageux que la surface extérieure, tournée vers l'élément 130, de la traverse 124 soit revêtue d'un revêtement 121 de type aluminé (par application de peinture, métallisation sous vide, etc...), de manière à donner au module, lorsqu'il est éteint et observé de l'extérieur, un aspect aussi homogène que possible. On note en effet que, de façon conventionnelle, le corps 110 d'une diode "Brewster" présente un aspect incolore, transparent ou translucide.

Bien que l'on ait décrit ci-dessus un module comportant quatre diodes de type "Brewster", il est bien entendu possible de réaliser des modules comportant un nombre quelconque de telles diodes. On peut ainsi concevoir un ensemble de briques élémentaires, par exemple à 1, 2, 4, 8 et 12 diodes disposées selon une rangée unique, ou encore à 4, 6 ou 8 diodes disposées côte-à-côte en deux rangées, etc..., pour réaliser des plages éclairantes (éventuellement bombées) de formes et de dimensions tout à fait quelconques par un choix judicieux de briques élémentaires.

Les figures 7 à 11 illustrent un module à diode de type "Brewster" selon une autre forme de réalisation de l'invention. Ce module comprend une ossature 120 et un élément de recouvrement 130 formés d'un seul tenant, par moulage de matière plastique transparente. L'ossature 120 est dans ce cas limitée à deux pattes 122' qui font saillie vers le bas à partir des régions médianes de deux côtés opposés de l'élément 130, et qui s'engagent au moins partiellement dans les encoches latérales opposées 118 de l'élément DEL 110, identique à celui décrit plus haut.

Le montage de ce module à une seule diode "Brewster" (ou, en variante, à plusieurs diodes) peut se faire sur un circuit imprimé (non représenté), les broches de l'élément DEL 110 et les extrémités libres des pattes 122' pouvant être engagées dans des trous appropriés du circuit imprimé.

On observe en outre sur ces figures que l'élément 130 définit une lentille plan-convexe, sa face intérieure 135, tournée vers l'élément 110, étant convexe, tandis que la partie en vis-à-vis 136a de sa face extérieure est plane, en étant bordée par une partie biseautée tronconique 136b. On réalise ainsi une concentration, suivant l'axe de l'élément 110, du flux lumineux qu'il émet.

Les figures 12 à 14 représentent une autre forme de réalisation d'un module selon l'invention.

On y trouve, de façon analogue à la forme de réalisation des figures 1 à 6, une ossature allongée 120 dont la section droite présente la forme générale d'un "H", avec deux branches latérales 122 et une traverse 124 dans laquelle sont pratiquées une pluralité d'ouvertures alignées 126, par exemple au nombre de quatre.

Mais à la différence de la forme de réalisation des figures 1 à 6, chaque élément DEL 110 est reçu non pas dans un logement spécifique formé dans la traverse 124, mais dans la cavité définie par la base des branches latérales 122 et par la traverse 124. A cet effet, il est prévu dans la partie de base desdites branches 122, au droit de chaque ouverture respective 126 et de part et d'autre de celle-ci, une nervure semi-circulaire 125a apte à s'engager dans une encoche associée 118 de l'élément DEL 110.

Une autre particularité du module des figures 12 à 14 réside en ce que l'élément de recouvrement 130, ici pourvu sur sa surface extérieure d'échelons de Fresnel 137, est encastré entre les deux branches 122, des gorges 123 étant formées à cet effet dans la région terminale extérieure desdites branches.

On observe enfin que les branches 122 de l'ossature 120 sont essentiellement parallèles entre elles dans la région de leur base, mais s'évasent vers le haut au delà de la traverse 124. On peut ainsi, comme précédemment, réaliser des plages éclairantes bombées.

Ici encore, les composants 110, 120 et 130 du module sont assemblés par une technique classique de collage ou de soudure. Un avantage propre à ce mode de réalisation réside en ce qu'on peut réaliser un profilé de grande longueur, dans lequel des ossatures 120 de diverses longueurs peuvent être découpées, pour réaliser des modules à N éléments 110.

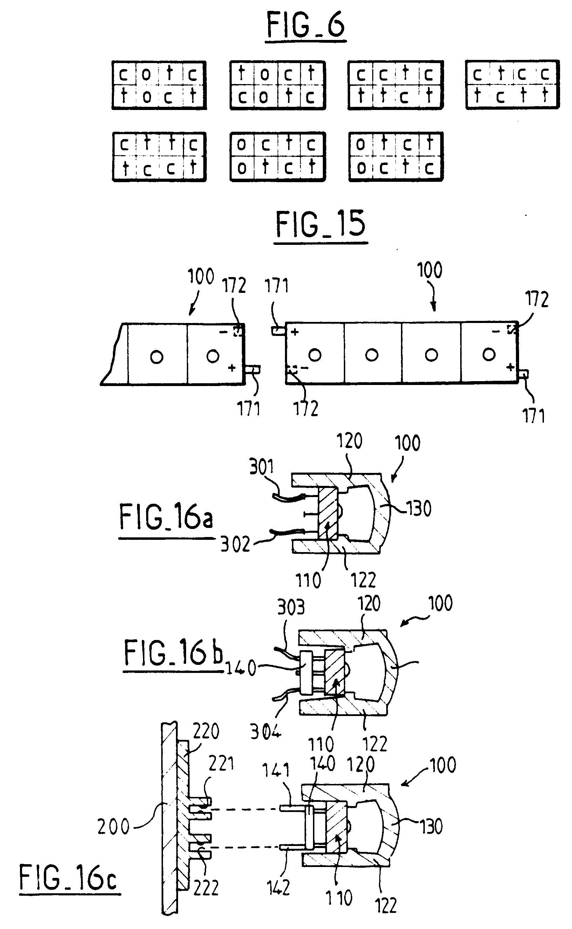

La figure 15 illustre schématiquement un mode de connexion électrique possible de deux modules 100 disposés dans l'alignement l'un de l'autre.

Chaque module 100 comporte, au niveau de chaque face d'extrémité longitudinale, une broche mâle 171 et une broche femelle 172 situées dans deux positions bien déterminées. A son extrémité opposée, il est prévu également deux broches mâle et femelle 171, 172 disposées de façon inversée. Ainsi, lors de la réalisation d'un alignement d'une pluralité de modules, une broche mâle 171 d'un module s'engage dans une broche femelle en vis-à-vis 172 du module voisin, tandis qu'une broche mâle 171 dudit module voisin s'engage dans la broche femelle 172 du module premier cité. L'on réalise ainsi un circuit d'alimentation électrique de type bus qui circule dans tous les modules connectés.

Les figures 16a à 16c illustrent schématiuqement d'autres types de connexions électriques possibles.

Dans le cas dans le la figure 16a, chaque diode de type "Brewster" 110 est reliée individuellement à un circuit d'alimentation par deux conducteurs souples 301, 302, dont les extrémités peuvent présenter des cosses (non représentées) à sertir sur les broches de ladite diode.

Sur la figure 16b, on a illustré un circuit imprimé 140 reçu dans une cavité de l'ossature 120, d'une manière tout à fait analogue au cas des figures 1 à 6. Ce circuit imprimé, sur lequel sont connectés N éléments DELs 110, est relié individuellement par deux conducteurs 303, 304 à un circuit d'alimentation.

La figure 16c illustre une solution qui fait appel également à un circuit imprimé 140. Cependant, ce circuit imprimé comporte deux broches conductrices mâles 141, 142 qui font saillie, en des positions bien déterminées, vers son côté opposé aux éléments DELs 110. La platine 200 porte quant à elle des éléments de connexion femelles 221, 222 destinés à recevoir lesdites broches mâles 141, 142. Par exemple, ces éléments de connexion femelles peuvent faire partie d'un circuit dit "circuit découpé", bien connu en soi pour la distribution des tensions d'alimentation à des lampes à filament d'un bloc de feux de signalisation, ce circuit découpé étant globalement indiqué en 220.

Dans un tel mode de réalisation, il est à noter que ces moyens de connexion électrique mâle-femelle peuvent être utilisés avantageusement pour la fixation mécanique de chaque module 100 sur la platine 200.

Et là encore, la position de la paire de broches mâles 141, 142 peut varier en fonction du type de module considéré, de manière à assurer un détrompage dans le même esprit, mais par des moyens techniques différents, que dans le cas des modules réalisés selon les figures 1 à 6.

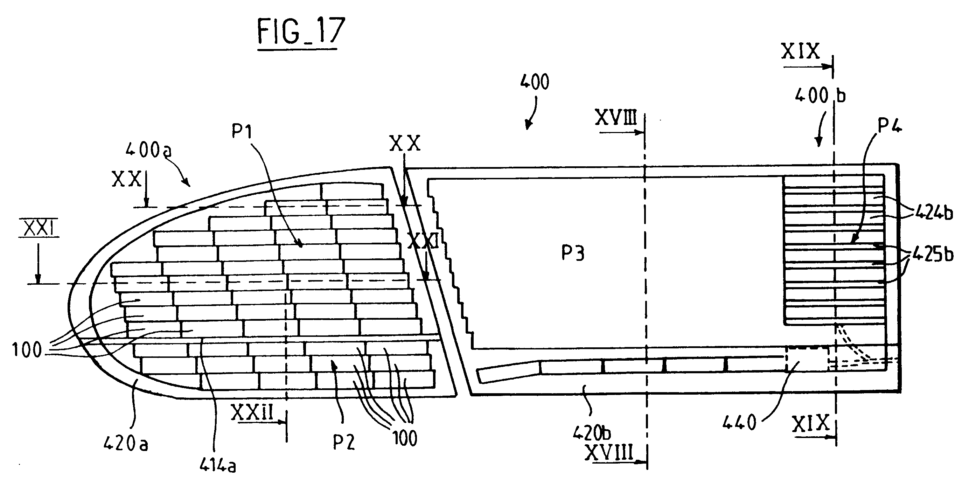

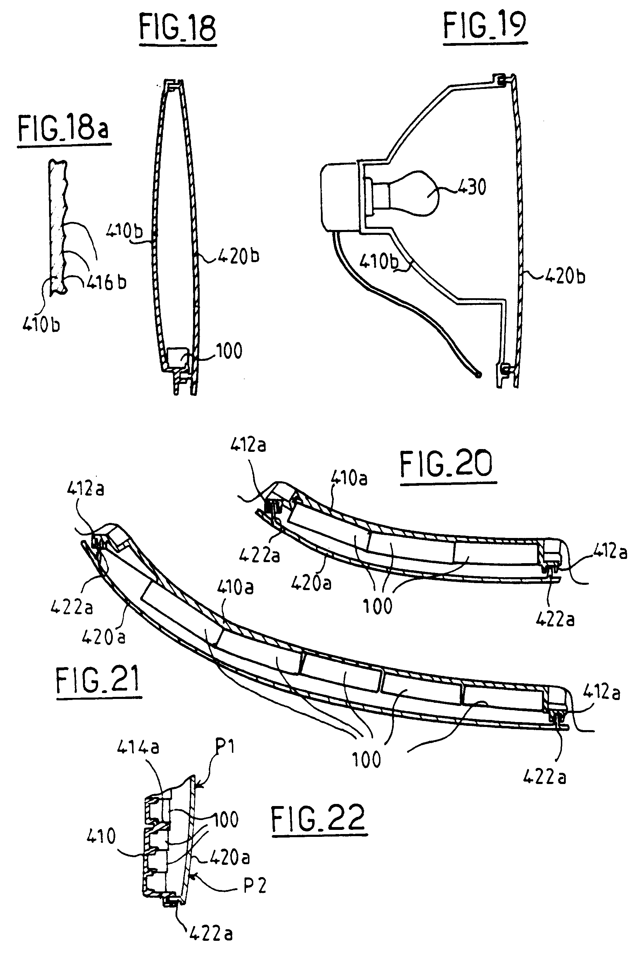

La figure 17 illustre schématiquement, en élévation de face, un bloc de feux de signalisation arrière de véhicule automobile utilisant des modules à diodes électroluminescentes tels qu'on les a décrits ci-dessus. Les figures 18 à 22 illustrent différentes coupes à travers ce bloc de feux.

En référence à ces figures, le bloc de feux 400 est séparé en deux parties distinctes, à savoir une partie extérieure bombée 400a, dite en retour d'aile, et une partie intérieure (par rapport à l'axe central du véhicule), de forme généralement plate.

La partie extérieure 400a comprend un fond 410a et un voyant ou globe 420a, de forme incurvée, situés à une distance essentiellement constante l'un de l'autre.

Le voyant 420a est monté sur le fond 410a à l'aide d'un rebord rentrant périphérique 422a, engagé dans une rainure complémentaire 412a formée à la périphérie du fond 410a. Un joint d'étanchéité (non référencé) est classiquement interposé entre ces deux pièces.

La partie extérieure 400a comporte deux plages éclairantes P1 et P2 réalisées exclusivement à l'aide de modules à diodes électroluminescentes 100 par exemple tels que décrits plus haut. Il s'agit en l'espèce de modules à quatre diodes 110. Le fond 410a de ladite partie 400a joue le rôle de la platine telle que 200 décrite en référence aux figures 1 à 6, en comportant par exemple des moyens de clipsage (non représentés) pour le montage des modules individuels. Par exemple, la plage P1 supérieure correspond à un feu stop, de couleur rouge, tandis que la plage inférieure P2, de hauteur moindre, correspond à un feu clignotant indicateur de direction, de couleur ambre.

On observe sur les figures 20 et 21 que les différents modules 100 sont décalés angulairement l'un par rapport à l'autre, ce que permettent les angles de dépouille, tels que décrits plus haut, de leurs surfaces terminales.

En section verticale (figure 22), les modules 100 sont décalés en position les uns par rapport aux autres de manière à épouser l'inclinaison du fond 410a et du voyant 420a.

Les deux plages P1 et P2 sont séparées par une zone mince 414a venue de matière, en saillie vers l'avant, lors du moulage du fond 410a.

Etant donné que la couleur des fonctions lumineuses considérées est donnée directement par les diodes électroluminescentes, le voyant 420a peut être réalisé en matière plastique transparente incolore, ou en une matière plastique teintée (par exemple fumée) de manière à ne pas sensiblement altérer les couleurs engendrées.

On observe que l'utilisation de modules à diodes électroluminescentes selon l'invention permet de réaliser des feux d'une profondeur extrêmement limitée, typiquement de 20 à 30 mm, tout en présentant des plages éclairantes dont les niveaux d'éclairement sont extrêmement homogènes.

La partie intérieure 400b du bloc de feux comporte, de façon analogue à la partie 400a, un fond 410b et un voyant 420b assemblés de la même manière. Cette partie 400b définit deux plages éclairantes P3 et P4.

La partie P3, destinée par exemple à remplir la fonction feu de position, est également réalisée à l'aide de modules à diodes électroluminescentes, mais d'une manière différente des plages P1 et P2. Plus précisément, il est prévu dans la région inférieure de la cavité correspondant à la plage P3 une rangée unique de plusieurs modules 100 orientés de manière à émettre la lumière vers le haut. La surface du fond 410b tournée vers le voyant 420b comporte un traitement particulier de façon à rabattre vers l'extérieur, tout en la diffusant, la lumière reçue des modules 100. Dans le mode de réalisation des figures 17 à 22, ce traitement consiste en un grenage. Mais selon une variante de réalisation, illustrée sur la figure 18a, ce traitement peut consister en une série de stries concaves 416b (ou encore de stries convexes) s'étendant horizontalement sur la surface du fond 410b. Au niveau de la plage P3, le voyant 420b peut être par exemple transparent incolore ou teinté (fumé). De façon préférée, un revêtement opaque, par exemple noir, est formé à la surface intérieure du voyant 420b au niveau de la rangée de modules 100, de manière à masquer lesdits modules lorsque le bloc de feux est observé de l'extérieur.

L'autre plage éclairante P4 de la partie 400b correspond par exemple à la fonction feu de recul ou à la fonction feu anti-brouillard arrière. Elle est réalisée ici de façon conventionnelle : le fond 410b définit au niveau de la plage P4 un réflecteur du genre parabolique, qui coopère avec une lampe 430 pour former un faisceau de signalisation concentré. Le voyant 420b, au niveau de la plage P4, peut présenter des zones 424b, 425b alternativement transparentes incolores et translucides de couleur fumée, de manière à présenter un aspect relativement homogène avec la partie du voyant correspondant à la plage P3 tout en n'atténuant pas excessivement le rayonnement lumineux.

La référence 440 indique schématiquement un circuit d'alimentation pour la rangée de modules 100 éclairant vers le haut dans la plage P3.

Bien entendu, on peut réaliser des feux ou blocs de feux à l'aide de modules à diodes électroluminescentes pour obtenir des contours et des formes tout à fait quelconques. En particulier, en utilisant des modules additionnels à une seule diode ou à deux diodes, on comprend qu'il est possible de suivre de près des contours courbes quelconques.

On peut également avoir recours à de "faux modules", c'est-à-dire des modules ayant la forme et l'apparence de modules tels qu'on les a décrits plus haut, mais dépourvus de diodes électroluminescentes. On peut ainsi réaliser des feux de signalisation présentant, lorsqu'ils sont éteints, un aspect extrêmement homogène sur une plage donnée, de grandes dimensions, mais dont la ou les plages éclairantes sont des sous-plages, plus petites, de ladite plage donnée.

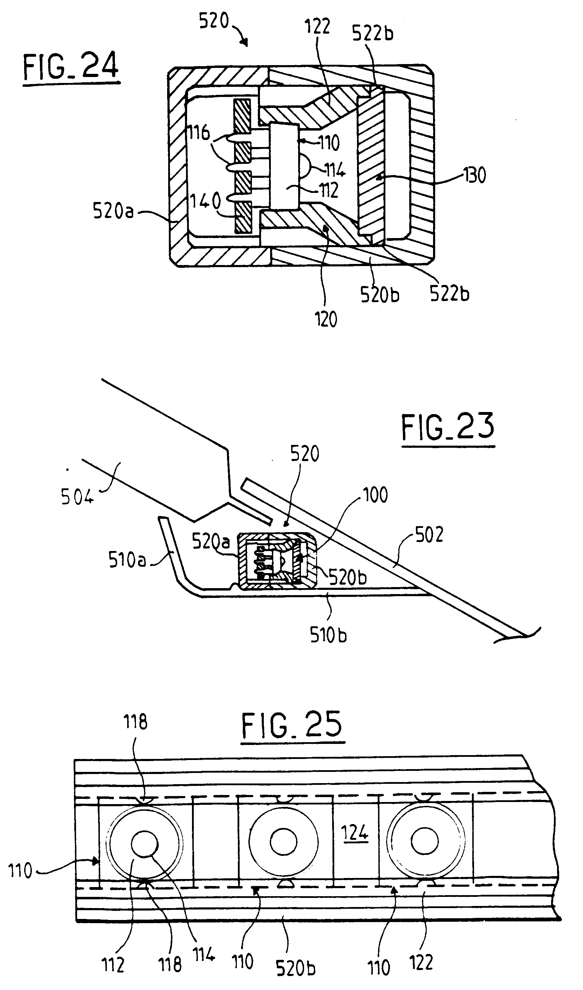

En référence aux figures 23 à 25, on va maintenant décrire un feu stop surélevé (feu de lunette arrière) réalisé selon l'invention avec des modules à diodes électroluminescentes.

La figure 23 représente la lunette arrière inclinée 502 du véhicule, un élément de carrosserie qui la surmonte étant désigné par 504.

Le feu stop surélevé comprend un capot 510 de section transversale en forme générale de "L", dont une branche essentiellement verticale 510a est plaquée contre l'élément 504 et dont une branche horizontale 510b est plaquée contre la lunette 502.

Sur le dessus de cette branche horizontale 510b est monté un feu stop qui comprend une pluralité de modules tels que décrits en référence aux figures 12 à 14, disposés selon une rangée horizontale unique. On pourrait prévoir en variante un module unique de grande longueur. Les modules sont disposés dans un boîtier ou coquille 520 s'étendant horizontalement et comportant deux demi-coquilles 520a et 520b, la demi-coquille arrière (par rapport à la direction d'émission de la lumière) étant opaque et comportant des moyens (non représentés) pour sa fixation sur la branche 510b du capot. La demi-coquille avant 520b est réalisée en matière plastique transparente incolore (ou fumée), de manière à laisser passer la lumière émise par les éléments DELs 110 et traversant le ou les éléments de recouvrement 130.

Un circuit imprimé est reçu dans la demi-coquille 520a, les pattes de connexion 116 des éléments 110 étant soudés sur ce circuit. Cette demi-coquille 520a abrite également les conducteurs souples de liaison électrique (non représentés).

La demi-coquille 520b reçoit quant à elle les modules 100, et elle comporte à cet effet, dans l'épaisseur de ses parois supérieure et inférieure, des épaulements 522b permettant le calage du bord antérieur (par rapport à la direction d'émission) de chaque module.

Les divers composants du feu (modules 100 et coquille 520) sont assemblés de préférence par collage.

On peut ainsi réaliser selon l'invention un feu stop surélevé d'une hauteur de quelques dizaines de millimètres et d'une largeur de plusieurs dizaines de centimètres, ce qui s'avère intéressant à la fois sur le plan de la sécurité (la vision dans le rétroviseur d'habitacle n'est pratiquement pas affectée) et sur le plan du style. L'intensité lumineuse du feu est en outre extrêmement homogène sur toute sa largeur.

## Revendications

1. Feu de signalisation pour véhicule automobile, du type comprenant un support (200; 410a; 520b), un voyant (420a; 520b) s'étendant le long du support, une pluralité d'éléments lumineux élémentaires (110), des moyens (210; 141, 142; 522b) pour la fixation desdits éléments de façon juxtaposée les uns aux autres dans des positions prédéterminées sur ledit support, et des moyens (301-304) pour la connexion électrique des éléments lumineux à une source d'alimentation électrique commune (440), les éléments lumineux (110) étant recouverts par un élément de recouvrement (130),
caractérisé en ce que les éléments lumineux sont des diodes électroluminescentes regroupées en modules (100), en ce que les diodes électroluminescentes d'un même module sont montées sur une ossature commune (120), en ce que chaque module incorpore des moyens de connexion électrique (140) des diverses diodes électroluminescentes du module entre elles, et en ce que le support (200; 401a; 520b) constitue une platine pour le montage desdits modules de façon juxtaposée les uns aux autres.

2. Feu de signalisation selon la revendication 1, caractérisé en ce que ledit élément de recouvrement (130) comprend des aménagements optiques (137) de déviation de la lumière.

3. Feu de signalisation selon la revendication 1 ou 2, caractérisé en ce qu'au moins certains modules (100) présentent un coutour rectangulaire et comportent une pluralité de diodes électroluminescentes (110) alignées selon un axe longitudinal et connectées électriquement en série.

4. Feu de signalisation selon l'une des revendications 1 à 3, caractérisé en ce que ladite platine est constituée par une paroi de fond (410a) dudit feu et en ce que les moyens de fixation comprennent des moyens (210) de clipsage sur ledit fond.

5. Feu de signalisation selon les revendications 3 et 4 prises en combinaison, caractérisé en ce que l'ossature (120) de chaque module lumineux comporte des parois latérales qui, de part et d'autre de chacune des diodes, présentent une pluralité de configurations d'assemblage (T, O, C) choisies dans le groupe comprenant une configuration ouverte (T), une configuration fermée (O) et une configuration (C) pour dent d'encliquetage.

6. Feu de signalisation selon la revendication 5, caractérisé en ce l'ossature (120) de chaque module lumineux présente un motif de configurations d'assemblage associé bi-univoquement à au moins une caractéristique du module choisie dans le groupe comprenant les caractéristiques de couleur de lumière et les caractéristiques de traitement optique réalisé par l'élément de recouvrement (130) au moins prévu.

7. Feu de signalisation selon la revendication 5 ou 6, caractérisé en ce que les moyens de fixation des modules sur la platine (200) comprennent, pour chaque module, au moins deux pattes souples (210) prévues en des positions prédéterminées sur ladite platine et comportant chacune une dent (212) apte à s'engager dans une cavité (122b) définie par une configuration d'encliquetage respective (C) d'un module.

8. Feu de signalisation selon la revendication 7, caractérisé en ce que chaque patte (210) pourvue d'une dent (212) est apte à coopérer avec une configuration d'encliquetage associée (C) d'un module (100) en s'étendant au moins partiellement dans un passage appartenant à une configuration ouverte (T) prévue dans une région, en vis-à-vis, d'un autre module (100) placé côte-à-côte avec ledit module, de manière à assurer un détrompage lors du positionnement des modules sur la platine.

9. Feu de signalisation selon l'une des revendications 4 à 8, caractérisé en ce qu'il comprend dans une première zone (P1) des premiers moyens de fixation pour des modules élementaires (100) d'un premier type, et dans une deuxième zone (P2), des deuxièmes moyens de fixation, de géométrie différente de celle des premiers moyens de fixation, pour des modules élémentaires (100) d'un deuxième type.

10. Feu de signalisation selon l'une des revendications 1 à 9, caractérisé en ce que l'ossature (120) de chaque module (100) comporte des faces terminales et/ou latérales présentant un angle de dépouille (α), de manière à pouvoir juxtaposer une pluralité de modules (100), avec un défaut d'alignement, sur une platine de support (410a) non plane.

11. Feu de signalisation selon l'une des revendications 1 à 3, caractérisé en ce qu'il comprend un fond (410b) s'étendant en arrière dudit voyant (420b), en ce que ladite platine s'étend généralement transversalement au fond et au voyant, dans une région périphérique du feu, en ce que les modules lumineux (100) sont fixés sur ladite platine de manière à émettre de la lumière dans une direction générale faiblement inclinée par rapport au fond, et en ce que la surface du fond (410b) tournée vers le voyant comporte des aménagements optiques (416b) capables de rabattre la lumière reçue en direction du voyant.

12. Feu de signalisation selon la revendication 11, caractérisé en ce que lesdits aménagements consistent en un grenage dudit fond (410b).

13. Feu de signalisation selon la revendication 11, caractérisé en ce que lesdits aménagements consistent en un striage (416b) dudit fond (410b).

14. Feu de signalisation selon l'une des revendications 11 à 13, caractérisé en ce qu'il comprend une rangée unique de modules allongés (100) disposés en succession, ladite rangée étant située dans la région inférieure d'une cavité définie par le voyant (420b) et le fond (410b).

15. Feu de signalisation selon l'une des revendications 11 à 14, caractérisé en ce que le voyant (420b) présente, au droit des modules, un revêtement opaque de masquage.

16. Feu de signalisation selon l'une des revendications 1 à 3, caractérisé en ce que ladite platine est constituée par une demi-coquille (520b), de section en forme générale de "U", appartenant à un boîtier allongé (520), en ce que le voyant est défini par une branche transversale de ladite demi-coquille, et en ce qu'une rangée unique de modules lumineux allongés (100) est disposée dans ladite demi-coquille contre des surfaces d'appui (522b) définies à l'intérieur de celle-ci.

17. Feu de signalisation selon la revendication 16, caractérisé en ce que le boîtier (520) est fermé et comprend une autre demi-coquille (520a) située en arrière de ladite rangée de modules.

18. Feu de signalisation selon l'une des revendications 16 et 17, caractérisé en ce que ladite rangée de modules (100) et le boîtier (520) sont disposés horizontalement et en ce qu'il comprend des moyens (510) pour son montage le long d'un bord horizontal d'une lunette arrière de véhicule.

19. Feu de signalisation selon l'une des revendications 1 à 18, caractérisé en ce que chaque module comporte un circuit imprimé (140) sur lequel sont soudées des pattes de connexion (116) desdites diodes électroluminescentes (110), et en ce que ledit circuit imprimé porte des broches de connexion (141; 142) aptes à coopérer avec des broches complémentaires (221, 222) prévues sur ladite platine (200), de manière à assurer au moins la connexion électrique des modules à une source d'alimentation électrique.

20. Feu de signalisation selon l'une des revendications précédentes, caractérisé en ce qu'il comprend en outre des modules élémentaires non lumineux présentant le même aspect que des modules lumineux éteints, de manière à présenter une plage éclairante dans une zone plus petite que la zone définie par les contours extérieurs du feu.

21. Bloc de feux de signalisation, caractérisé en ce qu'il comprend au moins un feu conforme à l'une des revendications précédentes.

## Claims

1. Indicator light for a motor vehicle, of the type comprising a support (200; 410a; 520b), a shield (420a; 520b) extending along the support, a plurality of elementary luminous elements (110), means (210; 141, 142; 522b) for fixing the said elements side by side in predetermined positions on the said support, and means (301-304) for the electrical connection of the luminous elements to a common source of electrical power (440), the luminous elements (110) being covered by a covering element (130),
characterised in that the luminous elements are light-emitting diodes grouped into modules (100), in that the light-emitting diodes of one and the same module are mounted on a common frame (12), in that each module incorporates means (140) of electrically connecting the various light-emitting diodes of the module together, and in that the support (200; 401a; 520b) forms a plate for mounting the said modules side by side.

2. Indicator light according to Claim 1, characterised in that the said covering element (130) comprises optical arrangements (137) for deflecting the light.

3. Indicator light according to Claim 1 or 2, characterised in that at least some modules (100) have a rectangular contour and have a plurality of light-emitting diodes (110) aligned along a longitudinal axis and connected electrically in series.

4. Indicator light according to one of Claims 1 to 3, characterised in that the said plate consists of a base wall (410a) of the said light and in that the fixing means comprise means (210) of snapping onto the said base.

5. Indicator light according to Claims 3 and 4 taken in combination, characterised in that the frame (120) of each luminous module has side walls which, on each side of each of the diodes, have a plurality of assembly configurations (T, O, C) chosen from the group comprising an open configuration (T), a closed configuration (O) and a configuration (C) for a snapping-in tooth.

6. Indicator light according to Claim 5, characterised in that the frame (120) of each luminous module has a pattern of assembly configurations associated biuniquely with at least one characteristic of the module chosen from the group comprising the characteristics of colour of light and the optical treatment characteristics produced by the covering elements (130) at least provided.

7. Indicator light according to Claim 5 or 6, characterised in that the means of fixing the modules onto the plate (200) comprise, for each module, at least two flexible lugs (210) provided in predetermined positions on the said plate and each having a tooth (212) suitable for engaging in a cavity (122b) defined by a respective snapping-in configuration (C) of a module.

8. Indicator light according to Claim 7, characterised in that each lug (210) provided with a tooth (212) is suitable for cooperating with an associated snapping-in configuration (C) of a module (100) while extending at least partially in a passage forming part of an open configuration (T) provided in a facing region of another module (100) placed side by side with the said module, so as to ensure location during the positioning of the modules on the plate.

9. Indicator light according to one of Claims 4 to 8, characterised in that it comprises, in a first zone (P1), first fixing means for elementary modules (100) of a first type and, in a second zone (P2), second fixing means, with a geometry different to that of the first fixing means, for elementary modules (100) of a second type.

10. Indicator light according to one of Claims 1 to 9, characterised in that the frame (120) of each module (100) has end and/or side faces having a taper angle (α), so that a plurality of modules (100) can be placed side by side and offset, on a non-planar support plate (410a).

11. Indicator light according to one of Claims 1 to 3, characterised in that it comprises a base (410b) extending at the rear of the said shield (420b), in that the said plate extends generally transversely to the base and to the shield, in a peripheral region of the light, in that the luminous modules (100) are fixed onto the said plate so as to emit light in a general direction slightly inclined with respect to the base, and in that the surface of the base (410b) turned towards the shield has optical arrangements (416b) capable of deflecting the received light in the direction of the shield.

12. Indicator light according to Claim 11, characterised in that the said arrangements consist of stipples on the said base (410b).

13. Indicator light according to Claim 11, characterised in that the said arrangements consist of ribs (416b) on the said base (410b).

14. Indicator light according to one of Claims 11 to 13, characterised in that it comprises a single row of elongate modules (100) disposed in succession, the said row being situated in the lower region of a cavity defined by the shield (420b) and the base (410b).

15. Indicator light according to one of Claims 11 to 14, characterised in that the shield (420b) has, in line with the modules, an opaque masking cover.

16. Indicator light according to one of Claims 1 to 3, characterised in that the said plate consists of a half-shell (520b), with a section of general "U" shape, forming part of an elongate housing (520), in that the shield is defined by a transverse branch of the said half-shell, and in that a single row of elongate luminous modules (100) is disposed in the said half-shell against support surfaces (522b) defined therein.

17. Indicator light according to Claim 16, characterised in that the housing (520) is closed and comprises another half-shell (520a) situated at the rear of the said row of modules.

18. Indicator light according to one of Claims 16 and 17, characterised in that the said row of modules (100) and the housing (520) are disposed horizontally and in that it comprises means (510) for mounting it along a horizontal edge of a rear window of the vehicle.

19. Indicator light according to one of Claims 1 to 18, characterised in that each module has a printed circuit (140) on which are welded connecting lugs (116) of the said light-emitting diodes (110), and in that the said printed circuit carries connection pins (141; 142) suitable for cooperating with complementary pins (221, 222) provided on the said plate (200) so as to ensure at least the electrical connection of the modules to an electrical power supply.

20. Indicator light according to one of the preceding claims, characterised in that it also comprises non-luminous elementary modules having the same appearance as the switched-off luminous modules, so as to present an illuminating area in a smaller zone than the zone defined by the outer contours of the light.

21. Indicator light cluster, characterised in that it comprises at least one light according to one of the preceding claims.

## Patentansprüche

1. Signalleuchte für Kraftfahrzeuge, bestehend aus einer Halterung (200; 410a; 520b), einem Leuchtenglas (420a; 520b), das sich entlang der Halterung erstreckt, einer Mehrzahl von elementaren Lichteinheiten (110), Mitteln (210; 141, 142; 522b) für die Befestigung der besagten Lichteinheiten nebeneinander in vorbestimmten Positionen auf der besagten Halterung und Mitteln (301-304) für den elektrischen Anschluß der Lichteinheiten an eine gemeinsame Stromversorgung (440), wobei die Lichteinheiten (110) durch ein Abdeckelement (130) abgedeckt sind **dadurch gekennzeichnet,** daß die Lichteinheiten zu Modulen (100) zusammengestellte Leuchtdioden sind, daß die Leuchtdioden ein und desselben Moduls auf einem gemeinsamen Gestell (120) angebracht sind, daß jedes Modul Mittel (140) für den elektrischen Anschluß der verschiedenen Leuchtdioden des Moduls untereinander enthält und daß die Halterung (200; 410a; 520b) eine Tragplatte für die nebeneinander erfolgende Anbringung der besagten Module bildet.

2. Signalleuchte nach Anspruch 1, **dadurch gekennzeichnet,** daß das besagte Abdeckelement (130) optische Anordnungen (137) zur Ablenkung des Lichts enthält.

3. Signalleuchte nach Anspruch 1 oder 2, **dadurch gekennzeichnet,** daß zumindest einige Module (100) einen rechteckigen Umriß aufweisen und eine Mehrzahl von Leuchtdioden (110) umfassen, die entlang einer Längsachse ausgerichtet und elektrisch in Reihe geschaltet sind.

4. Signalleuchte nach einem der Ansprüche 1 bis 3, **dadurch gekennzeichnet,** daß die besagte Tragplatte aus einer Bodenwand (410a) der besagten Signalleuchte besteht und daß die Befestigungsmittel Mittel (210) zum Aufklemmen an dem besagten Boden umfassen.

5. Signalleuchte nach den Ansprüchen 3 und 4 in Kombination , **dadurch gekennzeichnet,** daß das Gestell (120) jedes Leuchtmoduls Seitenwände umfaßt, die beiderseits jeder der Dioden eine Mehrzahl von Verbindungskonfigurationen (T, O, C) aufweisen, die aus einer Gruppe ausgewählt werden, zu der eine offene Konfiguration (T), eine geschlossene Konfiguration (O) und eine Konfiguration (C) für einen Rastzahn gehören.

6. Signalleuchte nach Anspruch 5, **dadurch gekennzeichnet,** daß das Gestell (120) jedes Leuchtmoduls ein Muster von Verbindungskonfigurationen aufweist, das eineindeutig mindestens einem Merkmal des Moduls zugeordnet ist, das aus einer Gruppe ausgewählt wird, zu der die Lichtfarbenmerkmale und die Merkmale der optischen Behandlung gehören, die durch das wenigstens eine vorgesehene Abdeckelement (130) erfolgt.

7. Signalleuchte nach Anspruch 5 oder 6, **dadurch gekennzeichnet,** daß die Mittel für die Befestigung der Module auf der Tragplatte (200) für jedes Modul mindestens zwei biegsame Ansätze (210) enthalten, die in vorbestimmten Positionen auf der besagten Tragplatte vorgesehen sind und jeweils einen Zahn (212) umfassen, der in einen Hohlraum (122b) eingreifen kann, der durch eine entsprechende Rastkonfiguration (C) eines Moduls gebildet wird.

8. Signalleuchte nach Anspruch 7, **dadurch gekennzeichnet,** daß jeder mit einem Zahn (212) versehene Ansatz (210) mit einer zugehörigen Rastkonfiguration (C) eines Moduls (100) zusammenwirken kann, wobei er sich zumindest teilweise in einen Durchgang erstreckt, der zu einer offenen Konfiguration (T) gehört, die in einem gegenüberliegenden Bereich eines anderen Moduls (100) vorgesehen ist, das neben dem besagten Modul angeordnet ist, so daß eine Einbaumarkierung bei der Positionierung der Module auf der Tragplatte geschaffen wird.

9. Signalleuchte nach einem der Ansprüche 4 bis 8, **dadurch gekennzeichnet,** daß sie in einem ersten Bereich (P1) erste Befestigungsmittel für Elementarmodule (100) einer ersten Art und in einem zweiten Bereich (P2) zweite Befestigungsmittel mit einer anderen Geometrie als die ersten Befestigungsmittel für Elementarmodule (100) einer zweiten Art enthält.

10. Signalleuchte nach einem der Ansprüche 1 bis 9, **dadurch gekennzeichnet,** daß das Gestell (120) jedes Moduls (100) Abschluß- und/oder Seitenflächen umfaßt, die einen Freiwinkel (α) aufweisen, so daß eine Mehrzahl von Modulen (100) mit einem Ausrichtungsversatz auf einer nicht ebenen Tragplatte (410a) nebeneinander angeordnet werden kann.

11. Signalleuchte nach einem der Ansprüche 1 bis 3, **dadurch gekennzeichnet,** daß sie einen Boden (410b) enthält, der sich hinter dem besagten Leuchtenglas (420b) erstreckt, daß sich die besagte Tragplatte allgemein quer zum Boden und zum Leuchtenglas in einem Umfangsbereich der Leuchte erstreckt, daß die Leuchtmodule (100) auf der besagten Platte befestigt sind, so daß sie Licht in einer allgemeinen Richtung abstrahlen, die im Verhältnis zum Boden leicht geneigt ist, und daß die zum Leuchtenglas gerichtete Oberfläche des Bodens (410b) optische Anordnungen (416b) umfaßt, die das empfangene Licht in Richtung des Leuchtenglases umlenken können.

12. Signalleuchte nach Anspruch 11 , **dadurch gekennzeichnet,** daß die besagten Anordnungen aus einer Körnung des besagten Bodens (410b) bestehen.

13. Signalleuchte nach Anspruch 11 , **dadurch gekennzeichnet,** daß die besagten Anordnungen aus einer Rillung (416b) des besagten Bodens (410b) bestehen.

14. Signalleuchte nach einem der Ansprüche 11 bis 13, **dadurch gekennzeichnet,** daß sie eine einzige Reihe von hintereinander angeordneten länglichen Modulen (100) enthält, wobei die besagte Reihe im unteren Bereich eines Hohlraums angeordnet ist, der durch das Leuchtenglas (420b) und den Boden (410b) gebildet wird.

15. Signalleuchte nach einem der Ansprüche 11 bis 14, **dadurch gekennzeichnet,** daß das Leuchtenglas (420b) in Höhe der Module eine undurchsichtige Blendbeschichtung aufweist.

16. Signalleuchte nach einem der Ansprüche 1 bis 3, **dadurch gekennzeichnet,** daß die besagte Tragplatte aus einer Halbschale (520b) mit einem allgemein "U"-förmigen Querschnitt besteht, die zu einem länglichen Gehäuse (520) gehört, daß das Leuchtenglas durch einen Querschenkel der besagten Halbschale begrenzt ist und daß eine einzige Reihe von länglichen Leuchtmodulen (100) in der besagten Halbschale an darin ausgebildeten Auflageflächen (522b) angeordnet ist.

17. Signalleuchte nach Anspruch 16 , **dadurch gekennzeichnet,** daß das Gehäuse (520) geschlossen ist und eine andere Halbschale (520a) umfaßt, die hinter der besagten Reihe von Modulen angeordnet ist.

18. Signalleuchte nach einem der Ansprüche 16 und 17, **dadurch gekennzeichnet,** daß die besagte Reihe von Modulen (100) und das Gehäuse (520) horizontal angeordnet sind und daß sie Mittel (510) für ihre Anbringung entlang einer horizontalen Kante einer Heckscheibe des Fahrzeugs enthält.

19. Signalleuchte nach einem der Ansprüche 1 bis 18, **dadurch gekennzeichnet,** daß jedes Modul eine gedruckte Schaltung (140) umfaßt, auf der Anschlußansätze (116) der besagten Leuchtdioden (110) aufgelötet sind, und daß die besagte gedruckte Schaltung Anschlußsteckelemente (141; 142) trägt, die mit formschlüssigen Steckelementen (221, 222) zusammenwirken können, die auf der besagten Tragplatte (200) vorgesehen sind, so daß zumindest der elektrische Anschluß der Module an eine Stromversorgung sichergestellt ist.

20. Signalleuchte nach einem der vorangehenden Ansprüche, **dadurch gekennzeichnet,** daß sie außerdem nichtleuchtende Elementarmodule mit dem gleichen Aussehen wie ausgeschaltete Leuchtmodule enthält, so daß sie ein Leuchtfeld in einem Bereich aufweist, der kleiner als der durch die Außenumrisse der Signalleuchte gebildete Bereich ist.

21. Signalleuchteneinheit, **dadurch gekennzeichnet,** daß sie mindestens eine Signalleuchte nach einem der vorangehenden Ansprüche umfaßt.
